# EUROPÄISCHE PATENTSCHRIFT

(11) **EP 0 512 088 B1**
(45) Veröffentlichungstag und Bekanntmachung des Hinweises auf die Patenterteilung: **16.08.1995**
(21) Anmeldenummer: 91920009.7
(22) Anmeldetag: 19.11.1991
(51) Int. Cl.: B60R 16/00

(54) **SCHALTHEBEL EINES LENKSTOCKSCHALTERS FÜR FAHRZEUGE**
SWITCH LEVER OF A STEERING COLUMN SWITCH FOR MOTOR VEHICLES
LEVIER DE COMMUTATEUR DE COLONNE DE DIRECTION POUR VEHICULES A MOTEUR

(30) Priorität: 22.11.1990 DE 4037153
(43) Veröffentlichungstag der Anmeldung: 11.11.1992
(73) Patentinhaber: ITT Automotive Europe GmbH, 60488 Frankfurt am Main (DE)
(72) Erfinder: KERNER, Wolfgang, D-7101 Erlenbach (DE); SCHREIBER, Franz, D-7129 Güglingen (DE); WEBER, Adam, D-7120 Bietigheim-Bissingen (DE)
(86) Internationale Anmeldenummer: EP9102180
(87) Internationale Veröffentlichungsnummer: WO9209455

(56) Entgegenhaltungen:
- DE-A- 2 532 093
- DE-B- 2 853 746
- DE-C- 3 740 022
- GB-A- 2 091 943
- US-A- 4 675 479

## Beschreibung

Die vorliegende Erfindung bezieht sich auf einen Schalthebel insbesondere eines Lenkstockschalters für Fahrzeuge nach dem Oberbegriff des Anspruchs 1.

Bei einem derartigen aus der DE 25 32 093 A1 bekannten Schalthebel besitzt der elektrische Schalter ein mehrteiliges Gehäuse, von dem ein Gehäuseteil als Aufnahmehülse das Schalthebelende aufnimmt und mit diesem ortsfest ist und von dem ein anderes Gehäuseteil als Schiebestück zum einen Gehäuseteil zur Ausführung einer Schaltfunktion axial bewegbar ist. Innerhalb des mit einer Kappe versehenen Schiebestücks ist eine erste Kontaktanordnung vorgesehen, die einer an der Aufnahmehülse gehaltenen zweiten Kontaktanordnung gegenüberliegt.

Auch aus der DE 31 07 440 C2 ist ein Schalthebel der genannten Art bekannt geworden, bei welchem das Schalthebelende als Schaltergehäuse dient, in welchem die verschiedenen Schalterbauteile, wie Druckknopf, Federn, Kontaktbrücke, Leiterplatte und dgl. aufgenommen sind.

Beiden bekannten Schalthebeln ist gemeinsam, daß die einzelnen Schalterbauteile um das Schalthebelende oder in dem Schalthebelende einzeln oder gruppenweise montiert angeordnet sind und daß die Kabelanschlüsse an die betreffende Kontaktanordnung bzw. Leiterplatte durch Anlöten hergestellt werden müssen, nachdem die Kabel durch den hohlen Schalthebel geschleift worden sind.

Diese Art der Montage der Schalterbauteile am bzw. im Schalthebelende ist aufwendig und umständlich. Außerdem ist der Lötarbeitsgang nur schwierig zu beherrschen, was zu Ausfällen und Reklamationen führt.

**Aufgabe** der vorliegenden Erfindung ist es, einen Schalthebel der eingangs genannten Art zu schaffen, dessen Montage mit dem endseitig vorgesehenen Schalter vereinfacht ist und der gleichzeitig einen sichereren Betrieb gewährleistet.

Zur Lösung dieser Aufgabe sind bei einem Schalthebel der genannten Art die im Anspruch 1 angegebenen Merkmale vorgesehen.

Durch die erfindungsgemäßen Maßnahmen ist es möglich, den elektrischen Schalter als komplette Schaltereinheit vorzufertigen und diese Schaltereinheit nach Abschluß der Fertigung des Schalthebels und der Vorbereitung der elektrischen Anschlußkontakte und deren Verbindung mit den Anschlußkabeln in den Schalthebel in einfacher Weise einzusetzen. Dies hat den Vorteil, daß die Schaltereinheit selbst vor dem Einsetzen in das Schalthebelende auf Funktionsfähigkeit überprüft werden kann. Außerdem ist es möglich, eine derartige hierfür bestimmte Schaltereinheit auch anderen Verwendungszwecken zuzuführen. Desweiteren kann in einfacher Weise die Anschlußverbindung zwischen den Anschlußkontakten am Schalthebelende und den entsprechenden Kabel vorgenommen werden; dabei können übliche Kontaktelemente und Kabelanschlußverbindungen verwendet werden. Dies bedingt einen geringeren Aufwand und aufgrund der Verwendung auch sonst üblicher Kabelanschlußverbindungen eine größere Betriebssicherheit.

Beispielsweise ist es möglich, die jeweiligen Anschlußkontakte an den Seitenbereichen von Aufnahmen im Schalthebelende bzw. Gehäuse der Schaltereinheit vorzusehen. Gemäß einem bevorzugten Ausführungsbeispiel vorliegender Erfindung sind jedoch gemäß den Merkmalen des Anspruchs 2 die ersten Anschlußkontakte in Richtung der Verlängerung der Aufnahme für die Schaltereinheit vorgesehen. Dadurch kann der Schalthebel schmalbauend ausgeführt werden.

Mit den Merkmalen gemäß Anspruch 3 ist eine weitere Vereinfachung der zur Aufnahme der Schaltereinheit vorbereitenden Montage des Schalthebels erreicht. Außerdem kann auf diese Weise die Verbindung von Anschlußkontakten und Kabelenden durch bewährte Verbindungen erreicht werden, ohne daß es größerer Einfädelarbeit bedarf.

Mit den Merkmalen gemäß Anspruch 4 ist das Verlegen der Kabel weiterhin erleichtert und darüber hinaus eine Zugentlastung der Kabel erreicht. Außerdem sind die Kabel im Deckel gehalten und können bei Montage nicht eingeklemmt werden.

Zweckmäßigerweise sind die Anschlußkontakte in Form der Merkmale gemäß Anspruch 5 ausgebildet.

Um die Schaltereinheit ggf. bei einem Defekt auswechseln zu können, ist es zweckmäßig, die Merkmale gemäß Anspruch 6 vorzusehen. Dabei ist es möglich, die lösbare Verrastung durch Rastteile am Gehäuse der Schaltereinheit und an der Innenseite des Schalthebelendes vorzusehen; es ist aber auch möglich, die Verrastung durch entsprechende Maßnahmen an der bspw. Steckverbindung zu ermöglichen.

Sind die Merkmale gemäß Anspruch 7 vorgesehen, wie es bei einer bevorzugten Ausführungsform der Erfindung verwirklicht ist, so ergibt sich eine weitere wesentliche Vereinfachung sowohl konstruktiver als auch montagetechnischer Art.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:
- Figur 1: eine größtenteils als Längsschnitt ausgeführte Darstellung eines endseitig mit einer Schaltereinheit versehenen Schalthebels gemäß einem bevorzugten Ausführungsbeispiel vorliegender Erfindung,
- Figur 2: einen Schnitt längs der Linie II-II der Fig. 1, insbesondere von Teilen der Schaltereinheit, und
- Figur 3: einen Schnitt längs der Linie III-III der Fig. 1.

Der in der Zeichnung gemäß einem bevorzugten Ausführungsbeispiel vorliegender Erfindung dargestellte Schalthebel 10 ist Teil eines Lenkstockschalters, dessen nicht dargestelltes Ende am Lenkstock eines Kraftfahrzeugs schwenkbar und/oder drehbar oder dgl. gehalten ist.

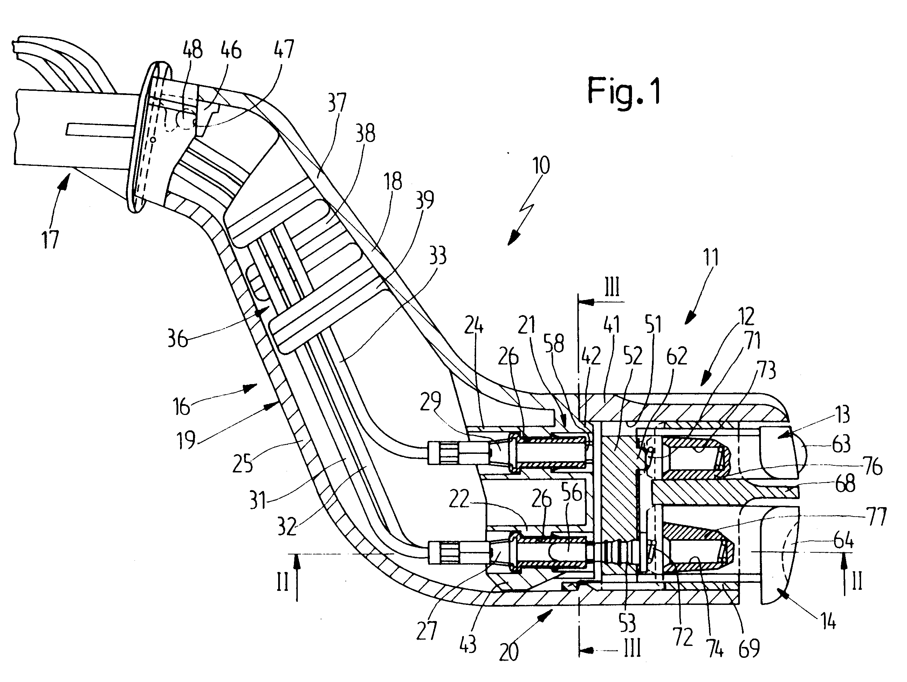

Der Schalthebel 10, der im Querschnitt etwa rechteckförmig ist, ist gemäß der Darstellung der Fig. 1 gekröpft ausgebildet und verläuft unter einem sich stetig erweiternden Querschnitt zu seinem geraden freien Endbereich 11 hin, dessen Querschnitt konstant ist. In diesem freien Endbereich 11 ist eine Schaltereinheit 12 aufgenommen, die beim dargestellten Ausführungsbeispiel zwei Schalterteile 13 und 14 beinhaltet.

Der Schalthebel 10 besitzt ein Gehäuse 16, das in einem Bereich zwischen einer Anlenkverbindung 17 des Lenkstockschalters und dem freien Endbereich 11 des Schalthebels 10 ein im Querschnitt U-förmiges Gehäuseteil 19, das an seiner in Einbaulage unteren Seite mit einem abnehmbaren Deckel 18 versehen ist, und am freien Endbereich 11 ein im Querschnitt rechteckförmiges endseitiges Gehäuseteil 20 besitzt, welche Gehäuseteile 19 und 20 einstückig aus Kunststoff geformt sind. Der in Richtung senkrecht der Zeichnungsebene der Fig. 1 ebene Gehäusedeckel 18, der in Einbaulage die beiden seitlichen parallelen Schenkel des U-förmigen Gehäuseteils 19 überdeckt, besitzt an seinem dem rechteckförmigen Gehäuseteil 20 zugewandten Ende ein senkrecht nach innen abstehendes Wandteil 21, das im Bereich von drei seiner Ecken mit dem endseitigen Gehäuseteil 20 abgewandten, nach innen weisenden Verdickungen 22, 23, 24 versehen ist, die jeweils mit einer gestuften Bohrung 26 bestückt sind, in denen eine Steckerbuchse 27, 28, 29 axial festgelegt aufgenommen und verrastet ist. Jede Steckerbuchse 27, 28, 29 ist an ihrem inneren Ende mit dem abisolierten Ende eines Kabels 31, 32 bzw. 33 fest verbunden, vorzugsweise festgekrimpt.

Der abnehmbare Deckel 18 ist an einem der Anlenkverbindung 17 nahen Bereich mit einer Zugentlastungsvorrichtung 36 in Form von hier drei zueinander parallelen in einer Ebene liegenden Stegen 37, 38, 39 versehen. Die an der Innenseite des Kunststoffdeckels 18 senkrecht abstehenden, angeformten Stege 37, 38, 39 sind in Richtung des Verlaufs der Kabel 31, 32, 33 in gleichem Abstand nebeneinander angeordnet. Die Stege können auch in einem spitzen Winkel zum Deckel verlaufen. Auf diese Weise können zur Zugentlastung die Kabel 31, 32, 33 nebeneinander bzw. übereinanderliegend zwischen den Stegen 37, 38, 39 gefädelt sein, wie dies aus Fig. 1 ersichtlich ist. Sowohl die freien Enden der Stege 37 - 39 als auch die dem Deckel 18 abgewandte Stirn des Wandteils 21 liegen in Einbaulage des Deckels 18 in nur geringem Abstand dem Boden 25 des U-förmigen Gehäuseteils 19 gegenüber oder an diesem an.

Der Deckel 18 ist vom U-förmigen Gehäuseteil 19 des Schalthebels 10 in der Weise abnehmbar, daß sein dem endseitigen Gehäuseteil 20 zugewandtes Ende mit einer die Decke 41 dieses Gehäuseteils 20 hintergreifenden Schulter 42 und mit einem als Gegenlager am Boden des U-förmigen Gehäuseteils 19 wirkenden Vorsprung 43 versehen ist. Darüber hinaus ist das andere Ende des abnehmbaren Deckels 18 an einem Ansatz 46 mit einer hinterschnittenen Nut 47 versehen, mittels der dieses Ende des Deckels 18 über einen Querstift 48, der zwischen den beiden parallelen Schenkeln des U-förmigen Gehäuseteils 19 gehalten ist, verrastend greift.

In einfacher Weise können somit die Kabel 31 - 33 vom einen Ende her in das noch offene (bei abgenommenem Deckel 18) Gehäuse 16 eingefädelt und mit den am Gehäusedeckel 18 gehaltenen Steckerbuchsen 27 - 29 fest verbunden werden, wobei sie zwischen die Zugentlastungsstege 37 - 39 gefädelt werden. Durch verrastendes Verschließen des ggf. wieder zu öffnenden Deckels 18 ist die Kabelverbindung durch den Schalthebel 10 hindurch zu den betreffenden Relais oder dgl. im Kfz. hergestellt.

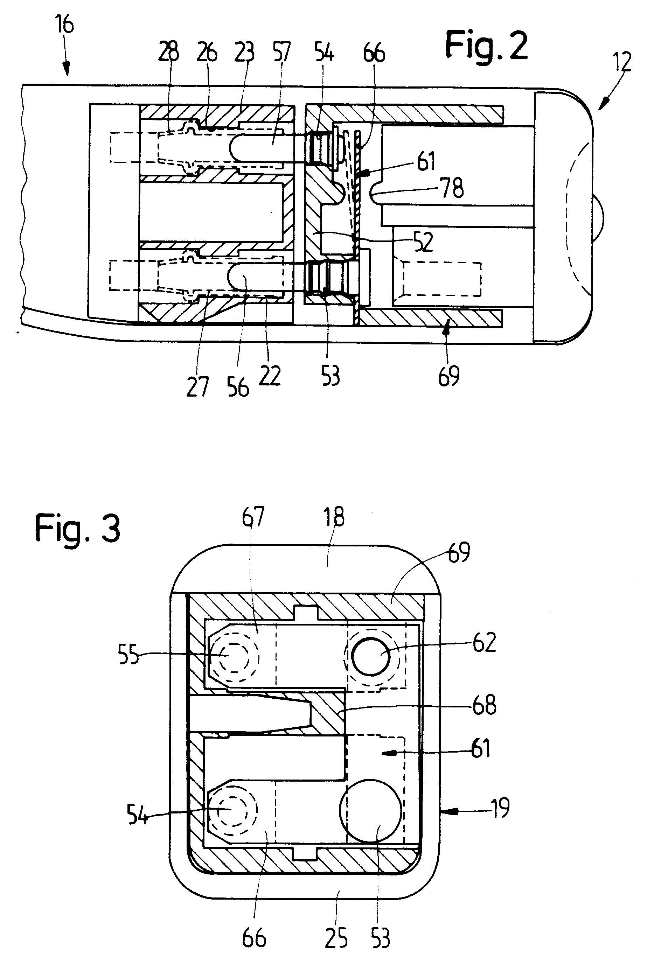

Im endseitigen, im Querschnitt rechteckförmigen Gehäuseteil 20 des Schalthebelgehäuses 16 ist eine rechteckförmige Aufnahme 51 vorgesehen, in welche die Schaltereinheit 12 auswechselbar einsetzbar ist. Dazu ist die Schaltereinheit 12 komplett und funktionsfähig vormontiert. Die Schaltereinheit 12 besitzt eine Bodenplatte 52, die an drei ihrer vier Eckbereichen mit Durchgangsbohrungen 53, 54 bzw. 55 versehen ist, in denen Steckerstifte 56, 57 bzw. 58 gehalten sind, die die Unterseite der Bodenplatte 52 überragen und die in die betreffenden Steckerbuchsen 27, 28, 29 im Wandteil 21 des Gehäusedeckels 18 einsteckbar sind. Die beiden in der Schaltereinheit 12 vereinigten Schalterteile 13 und 14 besitzen ein gemeinsames U-förmiges Kontaktfederblech 61, das in einer Ecke des Bodens 52 innenseitig mit dem einen Steckerstift 56 festgelegt und elektrisch verbunden ist und in einer anderen Ecke innenseitig über einen verstemmten Nietzapfen 62 mit der Bodenplatte 52 fest verbunden ist. Jeder Schalterteil 13, 14 besitzt einen Druckknopf 63, 64, der jeweils einem freien beweglichen Federende 66 bzw. 67 des Kontaktfederblechs 61 zugeordnet ist. Jedes Federende 66, 67 liegt gemäß Fig. 2 in nicht betätigter Ruhestellung in einem Abstand über dem Ende des zugeordneten Steckerstiftes 57, 58. Die Druckknöpfe 63, 64 sind in einem mit einer Trennwand 68 versehenen Schaltergehäuse 69 axial bewegbar und unverlierbar gehalten. Die axiale Bewegbarkeit erfolgt gegen den Druck einer Feder 71, 72, die sich einerseits in einer Sacklochbohrung 73, 74 und andererseits auf dem Federblech 61 abstützt. Mittels einer am Stößel 76, 77 des Druckknopfs 63, 64 angeordneten Nase 78 wird vom betreffenden Druckknopf das zugeordnete freie Federende 66, 67 zur Anlage an den betreffenden Steckerstift 56, 58 in Betriebsstellung gebracht.

Die Schaltereinheit 12 ist mit ihrem Schaltergehäuse 69 in einer nicht im einzelnen dargestellten Weise innerhalb der Aufnahme 51 des Schalterhebel-Gehäuseteils 20, deren Boden durch das Wandteil 21 des Deckels 18 des Gehäuseteils 19 gebildet ist, lösbar verrastbar. In dieser Raststellung gemäß Fig. 1 sind die Steckerstifte 56 - 58 in die Steckerbuchsen 27 - 29 eingeschoben, so daß eine elektrische Verbindung zwischen Schaltereinheit 12 und Kabel 31 - 33 besteht. Es ist statt dieser Gehäuseverrastung auch möglich, eine Verrastung über die Verbindung von Steckerstift und Steckerbuchse zu erreichen.

## Patentansprüche

1. Schalthebel, insbesondere eines Lenkstockschalters für Fahrzeuge, mit einem am freien Schalthebelende (11) angeordneten, mindestens einen Schalterteil (13,14) und ein Gehäuse (16) aufweisenden elektrischen Schalter, **dadurch gekennzeichnet**, daß der elektrische Schalter als vormontierte funktionsfähige Schaltereinheit (12) mit seinem Gehäuse (16) in eine Aufnahme (51) des freien Schalthebelendes (11) zumindest teilweise eingesetzt ist und daß im Schalthebelende (11) erste elektrische Anschlußkontakte (27-29) vorgesehen sind, mit denen entsprechende zweite elektrische Anschlußkontakte (56-58) an der Schaltereinheit (12) bei deren Einschieben in elektrische Verbindung bringbar sind.

2. Schalthebel nach Anspruch 1, dadurch gekennzeichnet, daß die ersten Anschlußkontakte (27-29) an einem den Grund der Aufnahme (51) bildenden Boden (21) des Schalthebelendes (11) vorgesehen sind.

3. Schalthebel nach Anspruch 1 oder 2, dadurch gekennzeichnet, daß der Schalthebel (10) an einem bis zum Grund der Aufnahme (51) für die Schaltereinheit (12) reichenden Zwischenbereich einen abnehmbaren Deckel (18) aufweist, der der Aufnahme (51) zugewandt ein den Querschnitt des Schalthebels (10) im wesentlichen einnehmendes Wandteil (21) besitzt, in welchem die ersten Anschlußkontakte (27-29) gehalten sind.

4. Schalthebel nach Anspruch 3, dadurch gekennzeichnet, daß der abnehmbare Deckel (18) an einem dem Wandteil (21) abgewandten Bereich mit im Abstand nebeneinander angeordneten, abstehenden Stegen (37-39) versehen ist, zwischen denen mit den ersten Anschlußkontakten (27-29) fest verbundene Kabel (31-33) vorzugsweise etwa mäanderförmig geklemmt sind.

5. Schalthebel nach mindestens einem der vorhergehenden Ansprüche, dadurch gekennzeichnet, daß die ersten und die zweiten Anschlußkontakte durch Steckerbuchsen (27-29) bzw. Steckerstifte (56-58) gebildet sind.

6. Schalthebel nach mindestens einem der vorhergehenden Ansprüche, dadurch gekennzeichnet, daß die Schaltereinheit (12) in der Aufnahme (51) lösbar verrastend gehalten ist.

7. Schalthebel nach mindestens einem der vorhergehenden Ansprüche, dadurch gekennzeichnet, daß die Schaltereinheit (12) zwei oder mehr Schaltteile (13,14) beinhaltet.

## Claims

1. A switch lever, in particular a steering column switch lever for motor vehicles, including an electric switch arranged at a free end of the switch lever (11) and having at least one switch component (13, 14) and a housing (16),
**characterized** in that the electric switch, as a preassembled functional switch unit (12), is at least partly inserted with its housing (16) into a holder (51) of the free end of the switch lever (11), and in that in the end of the switch lever (11) first electric connection contacts (27, 28 and 29) serve to provide an electric connection with corresponding second electric connection contacts (56, 57 and 58) on the switch unit upon insertion of the switch unit.

2. A switch lever as claimed in claim 1,
**characterized** in that the first connection contacts (27, 28 and 29) are provided on a wall section (21) at the end of the switch lever (11) forming the bottom of the holder (51).

3. A switch lever as claimed in claim 1 or claim 2,
**characterized** in that the switch lever (10) includes a detachable cover (18) in an intermediate area extending to the bottom of the holder (51) for the switch unit (12), which cover (18), facing the holder (51), has a wall section (21) substantially occupying the cross-section of the switch lever (10), in which wall section (21) the first connection contacts (27, 28 and 29) are retained.

4. A switch lever as claimed in claim 3,
**characterized** in that, in an area remote from the wall section (21), the detachable cover (18) has webs (37, 38 and 39) arranged one beside the other spaced from each other, between which webs (37, 38 and 39) cables (31, 32 and 33) firmly fastened to the first connection contacts (27, 28 and 29) are cramped, preferably roughly in a meander way.

5. A switch lever as claimed in at least one of the preceding claims,
**characterized** in that the first and the second connection contacts are formed by plug sockets (27, 28 and 29) or plug pins (56, 57 and 58).

6. A switch lever as claimed in at least one of the preceding claims,
**characterized** in that the switch unit (12) is detachably latched in the holder (51).

7. A switch lever as claimed in at least one of the preceding claims,
**characterized** in that the switch unit (12) includes two or more switch components (13, 14).

## Revendications

1. Levier de commutateur, notamment pour un commutateur de colonne de direction pour véhicules, comportant un commutateur électrique disposé à l'extrémité libre (11) du levier de commutateur, et comprenant au moins un élément commutateur (13, 14) et un boîtier (16), caractérisé en ce que le commutateur électrique réalisé sous forme d'une unité de commutateur (12) pré-assemblée, prête à fonctionner, est au moins partiellement inséré avec son boîtier (16) dans un logement (51) de l'extrémité libre (11) du levier de commutateur, et en ce que des premières bornes de raccordement électrique (27 à 29) sont prévues dans l'extrémité (11) du levier de commutateur, bornes avec lesquelles des secondes bornes correspondantes de raccordement électrique (56 à 58) disposées sur l'unité de commutateur (12) peuvent être amenées en contact électrique lors de la mise en place de l'unité.

2. Levier de commutateur selon la revendication 1, caractérisé en ce que les premières bornes de raccordement électrique (27 à 29) sont prévues sur un fond (21) de l'extrémité (11) du levier de commutateur, ce fond constituant la base du logement (51).

3. Levier de commutateur selon la revendication 1 ou 2, caractérisé en ce que le levier de commutateur (10) comporte, au niveau d'une zone intermédiaire s'étendant jusqu'au fond du logement (51) de l'unité de commutateur (12), un couvercle amovible (18), qui comporte, du côté dirigé face au logement (51), une partie de paroi (21) occupant essentiellement la section transversale du levier de commutateur, les premières bornes de raccordement électrique (27 à 29) étant maintenues dans cette partie de paroi.

4. Levier de commutateur selon la revendication 3, caractérisé en ce que le couvercle amovible (18) comporte, au niveau d'une zone dirigée vers l'opposé de la partie de paroi (21), des nervures saillantes (37 à 39) disposées les unes à côté des autres et à distance les unes des autres, entre lesquelles des câbles (31 à 33) fixés aux premières bornes de raccordement électrique (27 à 29) sont serrés de préférence en décrivant des méandres.

5. Levier de commutateur selon l'une au moins des revendications précédentes, caractérisé en ce que les premières et secondes bornes de raccordement électrique sont constituées par des fiches femelles (27 à 29) et des fiches mâles (56 à 58).

6. Levier de commutateur selon l'une au moins des revendications précédentes, caractérisé en ce que l'unité de commutateur (12) est encliquetée de façon démontable dans le logement (51).

7. Levier de commutateur selon l'une au moins des revendications précédentes, caractérisé en ce que l'unité de commutateur (12) comprend deux ou plusieurs éléments commutateurs (13, 14).
